(19) Europäisches Patentamt
European Patent Office
Office européen des brevets

(11) **EP 4 055 358 B1**

(12) **EUROPÄISCHE PATENTSCHRIFT**

(45) Veröffentlichungstag und Bekanntmachung des Hinweises auf die Patenterteilung:
**19.06.2024  Patentblatt 2024/25**

(21) Anmeldenummer: **20800636.1**

(22) Anmeldetag: **02.11.2020**

(51) Internationale Patentklassifikation (IPC):
**G01K 1/16** *(2006.01)*    **G01K 1/143** *(2021.01)*
**G01K 7/02** *(2021.01)*    **G01K 7/16** *(2006.01)*
**G01K 17/00** *(2006.01)*

(52) Gemeinsame Patentklassifikation (CPC):
**G01K 17/003; G01K 1/143; G01K 1/165;**
**G01K 7/02; G01K 7/16**

(86) Internationale Anmeldenummer:
**PCT/EP2020/080641**

(87) Internationale Veröffentlichungsnummer:
**WO 2021/089460 (14.05.2021 Gazette 2021/19)**

(54) **SENSORELEMENT ZUR ERFASSUNG EINER OBJEKTTEMPERATUR UND VERFAHREN ZUM BEWERTEN DER MESSQUALITÄT EINES SOLCHEN SENSORELEMENTS**

SENSOR ELEMENT FOR MEASURING AN OBJECT TEMPERATURE AND METHOD FOR ASSESSING THE MEASUREMENT QUALITY OF SUCH A SENSOR ELEMENT

ÉLÉMENT CAPTEUR POUR DÉTECTER LA TEMPÉRATURE D'UN OBJET ET MÉTHODE POUR EVALUER LA QUALITÉ DE MESURE D'UN TEL ÉLÉMENT CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2019  DE 102019129820**

(43) Veröffentlichungstag der Anmeldung:
**14.09.2022  Patentblatt 2022/37**

(73) Patentinhaber: **Innovative Sensor Technology IST AG**
**9642 Ebnat-Kappel (CH)**

(72) Erfinder:
• **NURNUS, Joachim**
  **79395 Neuenburg (DE)**
• **KROGMANN, Florian**
  **8280 Kreuzlingen (CH)**

(74) Vertreter: **Trenkle, Dennis**
**Endress + Hauser Group Services**
**(Deutschland) AG+Co. KG**
**Colmarer Straße 6**
**79576 Weil am Rhein (DE)**

(56) Entgegenhaltungen:
DE-A1-102013 206 406    DE-A1-102015 114 314
DE-B3-102006 012 338    JP-A- 2019 174 128

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sensorelement zur Erfassung der Temperatur eines Objekts. Des Weiteren umfasst die Erfindung ein Verfahren zum Bewerten der Messqualität eines erfindungsgemäßen Sensorelements.

Im Stand der Technik sind Aufbauten von Temperatursensoren ausführlich beschrieben. Diese umfassen für gewöhnlich einen Thermistor, welcher durch eine Temperaturänderung eine Änderung seines elektrischen Widerstands erfährt. Dadurch, dass das Material und die Kennlinie (elektrischer Widerstand über Temperaturbereiche) eines Thermistors bekannt sind, kann durch Erfassen des elektrischen Widerstands die aktuelle Temperatur des Thermistors ermittelt werden. Beispielsweise werden solche Temperatursensoren in Dünnschichttechnik gefertigt und weisen als Thermistor eine funktionale Schicht, beispielsweise aus Platin, auf.

Zum Erfassen einer Temperatur eines Objekts werden Temperatursensoren an das zu messende Objekt thermisch angekoppelt, beispielsweise durch Löten oder Silbersintern. Beispiele für Verfahren zum Anbringen eines Temperatursensors an ein zu messendes Objekt, wodurch eine gute thermische Kopplung zwischen dem Temperatursensor und dem Objekt erzielt wird, sind beispielsweise in der DE 102015114314 A1 und in der DE 102016116101 A1 beschrieben. Ein Beispiel für ein Objekt, an welches der Temperatursensor angebracht wird, ist ein Gehäuse, beispielsweise ein Röhrchen. Der Temperatursensor wird zum Schutz vor äußeren Einflüssen in das Innere des Gehäuses eingebracht. Das Gehäuse selbst wird dann mit einem Medium in Kontakt gebracht. Der Temperatursensor kann dann anhand der Temperatur des Gehäuses die Mediumtemperatur bestimmen.

Durch die Ankopplung eines Temperatursensors an das zu messende Objekt entstehen oft unbekannte, bzw. undefinierte thermische Übergangswiderstände und unmittelbar daraus resultierende Wärmeströme, welche zu einem Unterschied zwischen der vom Temperatursensor gemessenen Temperatur und der tatsächlichen Temperatur des Objekts führen. Weitere Fehlerquellen, welche zu einer Abweichung der vom Temperatursensor gemessenen Temperatur und der tatsächlichen Temperatur des Objekts führen können sind Temperaturgradienten an der Oberseite eines Temperatursensors durch Konvektion, Strahlung, etc., sowie Wärmeabfuhr, bzw. - zufuhr durch die elektrischen Zuleitungen eines Temperatursensors.

Die JP 2019 174128 A offenbart einen Wärmestromsensor zur Messung eines Wärmestroms, wobei der Wärmestromsensor zur Messung des Wärmestroms in Form eines dünnen Films ausgebildet ist und Thermoelemente umfasst. Die Thermoelemente geben ein Signal aus, das dem zwischen einer Oberfläche in Richtung der Dicke und der anderen Oberfläche fließenden Wärmestrom entspricht. In der DE 10 2013 206406 A1 ist ein Raumklimamessgerät offenbart, welches es erlaubt, einen innerhalb des Geräts strömenden Wärmestroms mittels Thermoelementen zu erfassen.

In der DE102006012338 B3 ist eine Anordnung zum Messen der Kerntemperatur eines Körpers offenbart.

Ausgehend von dieser Problematik liegt der Erfindung die Aufgabe zugrunde, ein Sensorelement vorzustellen, welches es erlaubt, Wärmeströme innerhalb des Sensorelements zu detektieren.

Die Aufgabe wird durch ein Sensorelement gemäß Anspruch 1 und durch ein Verfahren gemäß

Anspruch 10 gelöst.

Hinsichtlich des Sensorelements ist erfindungsgemäß vorgesehen, dass das Sensorelement zur Erfassung einer Temperatur eines Objekts dient, wobei das Sensorelement umfasst:

- Ein Substrat, wobei das Substrat eine Grundfläche umfasst, welche eine erste Ebene definiert;
- Ein in einer ersten Temperaturebene auf dem Substrat aufgebrachter Temperaturfühler, welcher dazu ausgestaltet ist, die Temperatur des Objekts zu erfassen, wobei die erste Temperaturebene in der ersten Ebene oder im Wesentlichen parallel zu der ersten Ebene liegt;
- Zumindest ein auf einem ersten Teilbereich des Substrats aufgebrachter Sensor zur Bestimmung einer Temperaturdifferenz innerhalb des ersten Teilbereichs; und
- Eine auf das Substrat aufgebrachte erste Passivierung, welche das Substrat, den Temperaturfühler und den Sensor zur Bestimmung der Temperaturdifferenz bedeckt.

Die im Stand der Technik beschriebenen Sensorelemente, welche zur Erfassung der Temperatur dienen, führen, wie obig erwähnt, häufig zu einem Temperaturunterschied und dadurch zu einem Wärmestrom im Sensorelement. Durch das Implementieren eines weiteren Sensors, welcher eine Temperaturdifferenz erfasst, lässt sich ein Wärmestromsensor ausbilden, welcher eine Aussage über die Qualität der vom Temperaturfühler ermittelten Temperatur des Objekts ermöglicht, was gleichbedeutend mit einem in Richtung der Temperaturdifferenz fließenden Wärmestrom ist. Hierfür gibt der weitere Sensor eine Messgröße, beispielsweise eine Spannung, aus. Je größer die Messgröße ausfällt, desto größer der Wärmestrom im Sensorelement, desto geringer also die Genauigkeit der vom Temperaturfühler ermittelten Temperatur des Objekts.

Das Substrat ist häufig ein flaches, starres Bauteil, insbesondere bestehend aus einem Halbleiter- oder Keramikmaterial. Das bedeutet, dass die Höhe, bzw. Dicke des Substrats bedeutend kleiner ist als dessen Breite und Länge.

Außerdem ist das Substrat in der Regel planar ausgestaltet. Die von der Breite und Länge des Substrats aufgespannte Oberfläche wird als Grundfläche bezeichnet, welche eine zweidimensionale Ebene in x- und y-Richtung ausbildet. Der Temperaturfühler ist auf einer ersten Temperaturebene aufgebracht. Diese ist entweder selbst die erste Ebene, also die Grundfläche, oder liegt in einer parallelen zweiten Ebene, also kann versetzt zu der Grundfläche des Substrats sein, beispielsweise, wenn sich zwischen der Grundfläche und dem Temperaturfühler weitere Schichten, beispielsweise eine erste Passivierung befindet. Als Temperaturebene wird prinzipiell eine geometrische Ebene bezeichnet. Diese kann entweder eine isotherme Ebene sein, deren Temperatur an jedem Punkt der Ebene um denselben Wert von der Objekttemperatur abweicht. Oder aber die Temperaturwerte in dieser Ebene unterscheiden sich über die gesamte Ebene. Beide Fälle lassen sich mittels eines erfindungsgemäßen Sensorelements detektieren.

Der Temperaturfühler ist insbesondere eine strukturierte Schicht, welche mittels eines Dickschicht- oder Dünnschichtverfahrens aufgebracht und strukturiert ist.

Der Sensor zur Bestimmung einer Temperaturdifferenz ist derart auf dem Substrat aufgebracht, dass dieser ein Maß für einen Wärmestrom in zumindest einer Richtung (x- oder y-Richtung) ermöglicht. Der Sensor weist zwei Kontakte auf. Der Wärmestrom wird in der Verbindungsrichtung der beiden Kontakte gemessen.

Alternativ kann auch ein flexibles Substrat, beispielsweise eine Folie, oder ein gekrümmtes Substrat verwendet werden. Das Material eines solches Substrats umfasst beispielsweise ein Polymer oder Metall, insbesondere Edelstahl. Die Grundfläche, und damit die erste Ebene, kann in diesem Fall also gekrümmt ausgestaltet sein. Die weiteren Ebenen, bzw. Temperaturebenen sind dann parallel zu dieser gekrümmten Ebene.

Der Temperaturfühler und das Thermoelement sind mittels Leiterbahnen mit Kontaktpads in der Art verbunden, dass der Temperaturfühler und das Thermoelement separate Kontaktpads aufweisen. Alternativ teilen sich der Temperaturfühler und das Thermoelement einen ersten Kontakt, während der jeweils zweite Kontakt separat ist. Die vom Temperaufühler gemessene Temperatur und die vom Thermoelement erfasste Temperaturdifferenz lassen sich dadurch separat auslesen.

Neben dem Erfassen von Wärmeströmen lässt sich das erfindungsgemäße Sensorelement auch für weitere Anwendungen einsetzen. Beispielsweise kann ein Wert für die Güte einer auf das Sensorelement einfallende Strahlung, z. B. ein Laserstrahl, gemessen werden, insbesondere bezogen auf eine gleichförmige Intensitätsverteilung über den Querschnitt des Laserstrahls. Der Temperatursensor bestimmt eine Temperatur des Laserstrahls, während das Thermoelement die eingestrahlte Leistung quantifiziert.

Erfindungsgemäß umfasst der Sensor zur Bestimmung der Temperaturdifferenz ein erstes Thermoelement, welches aus einem Leiterpaar aus unterschiedlichem Material besteht, wobei das Leiterpaar einen Kontaktierungspunkt in der ersten Temperaturebene und einen vom Kontaktierungspunkt entfernten Bezugspunkt aufweist und wobei das Thermoelement derart ausgestaltet ist, dass dieses eine Ausgangsspannung erzeugt, welche Ausgangsspannung ein Maß für eine Temperaturdifferenz zwischen dem Kontaktierungspunkt und dem Bezugspunkt darstellt. Die gedachte Verbindung zwischen dem Kontaktierungspunkt und dem Bezugspunkt entspricht der Richtung des zu detektierenden Wärmestroms. Thermoelemente sind als besonders vorteilhaft anzusehen, da bei diesen keine zusätzliche elektrische Leistung in das Sensorelement eingebracht werden muss.

Das Thermoelement gibt als Messgröße eine Spannung aus. Diese Spannung ist abhängig von der zwischen dem Kontaktierungspunkt und dem Bezugspunkt vorliegenden Temperaturdifferenz, konkret:

$$U = S * (\Delta T)$$

S bezeichnet den thermoelektrischen Koeffizienten der Materialkombination beider Leiter (Einheit $\mu V/K$). Die Lage des Thermoelements gibt die Richtung des Wärmestroms wieder, da die Temperaturdifferenz zwischen dem Bezugspunkt und dem Kontaktpunkt bestimmt wird.

Als Kontaktpunkt wird derjenige Ort des Thermoelements bezeichnet, an welchem die ersten Endpunkte der beiden Leiter liegen. Über den Kontaktpunkt kann das Thermoelement elektrisch kontaktiert werden. Als Bezugspunkt diejenige Stelle des Thermoelements bezeichnet, an welchem sich die Endpunkte der beiden Leiter kontaktieren

Der Kontaktpunkt des ersten Thermoelements liegt in der ersten Ebene. Nur so kann ein Wärmestrom relativ zur vom Temperaturfühler erfassten Temperatur des Objekts detektiert werden, da nur in diesem Fall die thermischen Bedingungen des Kontaktpunkts als Referenzstelle und des Temperaturfühlers identisch sind. Vorteilhafterweise kann der Kontaktierungspunkt des Thermoelements und der Temperaturfühler dann im selben Prozessschritt realisiert werden.

Alternativ zu einem Thermoelement kann auch ein weiterer Temperaturfühler, beispielsweise ein Thermistor, zur Messung einer absoluten Temperatur der verwendet werden, welche in einer zur ersten Temperaturebene verschiedenen weiteren Temperaturebene angebracht ist. Dieser muss jedoch mit einer Spannung beaufschlagt werden. Mittels des weiteren Temperaturfühlers ist eine absoluten Temperatur der zweiten Temperaturebene erfassbar. Wenn diese verschieden zur erfassten Temperatur des Temperaturfühlers in der ersten Temperaturebene ist, dann liegt ein Wärmestrom vor.

Erfindungsgemäß ist vorgesehen, dass das Thermoelement derart angebracht ist, dass der Kontaktierungspunkt und der Bezugspunkt jeweils in der ersten Temperaturebene liegen. Der Wärmestrom wird also auf der ersten Temperaturebene entweder in x-Richtung, in y-Richtung oder in einer Richtung mit x- und y-Anteil erfasst.

Eine nicht beanspruchte Variante des Sensorelements sieht vor, dass das Thermoelement derart angebracht ist, dass der Bezugspunkt in einer zur ersten Temperaturebene verschiedenen Temperaturebene liegt. Das Thermoelement ist in diesem Fall zum Beispiel orthogonal (dann z-Richtung) zur ersten Ebene angeordnet. Fertigungstechnisch wird dies derart realisiert, dass eine Schicht mit bekanntem thermischem Widerstand, beispielsweise die bereits beschriebene erste Passivierung, aufgebracht wird. Anschließend werden zur ersten Ebene senkrecht Löcher in dieser Schicht erzeugt, in welche das Thermoelement angeordnet, bzw. angebracht wird.

Eine vorteilhafte Weiterbildung des erfindungsgemäßen Sensorelements sieht vor, dass der Sensor zur Bestimmung der Temperaturdifferenz zumindest ein weiteres Thermoelement umfasst, welches elektrisch in Reihe zu dem ersten Thermoelement geschaltet ist und welches derart angeordnet ist, dass dessen Kontaktierungspunkt in der ersten Temperaturebene liegt und dass dessen Bezugspunkt in der ersten Temperaturebene (erfindungsgemäß) oder in einer zur ersten Temperaturebene verschiedenen Temperaturebene (in einer nicht beanspruchten Variante) liegt. Durch die serielle Verschaltung addieren sich die von den Thermoelementen erzeugten Spannungen. In dem Fall, dass die Bezugspunkte der Thermoelemente in derselben Temperaturebene liegen und dass die Materialien der Thermoelemente identisch sind, lässt sich die Abhängigkeit der Ausgangsspannung von der Temperaturdifferenz wie folgt ausdrücken:

$$U = N * S * (\Delta T)$$

N bezeichnet hier die Anzahl der in Serie geschalteten Thermoelemente.

Gemäß einer bevorzugten Weiterbildung des erfindungsgemäßen Sensorelements ist vorgesehen, dass das Sensorelement zumindest einen auf einem zweiten, zum ersten Teilbereich des Substrats verschiedenen zweiten Teilbereich aufgebrachter Sensor zur Bestimmung einer Temperaturdifferenz innerhalb des zweiten Teilbereichs aufweist.

Dieser Sensor ist analog zu dem Sensor zur Temperaturbestimmung auf dem ersten Teilbereich ausgestaltet. Wie auch im ersten Teilbereich ist es auch im zweiten Teilbereich möglich, dass mehrere Thermoelemente seriell miteinander verschaltet sind. Der Sensor ist mit weiteren Kontaktpads verbunden, so dass die Temperaturdifferenz separat zur vom Sensor des ersten Teilbereichs erfassten Temperaturdifferenz und zur vom Temperaturfühler erfassten Temperatur erfasst werden kann. Auf diese Art und Weise ist ein im zweiten Teilbereich unabhängiger Wärmestrom detektierbar. Dies kann zur Fehlerursachendetektion verwendet werden.

Durch eine Aufteilung des Substrats in viele kleine Teilbereiche mit separaten Sensoren zur Erfassung einer Temperaturdifferenz, welche vorteilhafterweise raster- oder matrixhaft angeordnet sind, lassen sich Aussagen über örtliche Verläufe, bzw. Ursprünge von Wärmeströmen relativ genau treffen. Jeder Sensor wirkt hier als eine Art "Pixel". Dadurch kann genauer auf die Fertigungsqualität, bzw. die Qualität der Methode des Anbringens des Sensorelements an dem Objekt, rückgeschlossen werden. Auch kann ein solches Element zur genauen Detektion von beispielsweise Wärmestrahlung von außen verwendet werden, wenn jedes der "Pixel" einen eigenen Absoluttemperatursensor erhält.

Gemäß einer vorteilhaften Weiterbildung des erfindungsgemäßen Sensorelements ist vorgesehen, dass das Sensorelement eine Deckschicht aufweist, welche im Wesentlichen vollständig über der ersten Passivierung oder auf einer auf der ersten Passivierung aufgebrachten zweiten Passivierung aufgebracht ist. Mittels der zweiten Passivierung werden alle Bezugspunkte der Thermoelemente und der/die Temperaturfühler vor Umwelteinflüssen geschützt.

Eine vorteilhafte Ausgestaltung des erfindungsgemäßen Sensorelements sieht vor, dass die Deckschicht ein wärmereflektierendes Material, insbesondere ein metallisches Material, oder ein strahlungsabsorbierendes Material umfasst.

Eine solch ausgeschaltete Deckschicht ermöglicht eine passive Kompensation von Wärmeströmen. Mittels der Schicht aus wärmereflektierendem Material kann Strahlung von außerhalb am Eindringen in das Sensorelement verhindert werden. Beispielsweise besteht eine solche reflektierende Schicht aus Gold oder Aluminium. Ebenso können Wärmeströme reflektiert werden. Dies führt dazu, dass Wärmeströme reduziert werden und die vom Temperaturfühler gemessene Temperatur näher an der tatsächlichen Temperatur des Objekts ist.

Als Beispiel für strahlungsabsorbierendes Material kann beispielsweise ein Material aus porös ausgestaltetem Metall, bevorzugt Gold, Platin, Schwarz-Gold, Schwarz-Platin oder ein poröses Metalloxid verwendet werden.

Gemäß einer alternativen vorteilhaften Weiterbildung des erfindungsgemäßen Sensorelements ist vorgesehen, dass das Sensorelement eine aus einem wärmeleitfähigen Material bestehende Kapselung aufweist, welche derart angeordnet ist, dass die Kapselung die erste Passivierung oder eine auf der ersten Passivierung aufgebrachte zweite Passivierung im Wesentlichen vollständig bedeckt und wärmeleitend kontaktiert und dass die Kapselung das Substrat, und insbesondere das Objekt, wärmeleitend kontaktiert. In letzterem Fall kontaktiert die Kapselung das Objekt möglichst durch das Substrat.

Diese Ausführungsform stellt eine weitere Art der passiven Kompensation von Wärmeströmen dar.

Die Kapselung bildet eine Art "thermisches Schild" für Messobjekte mit hoher Wärmekapazität. Das Messobjekt wirkt hierbei als Wärmesenke. Insbesondere werden hierfür Materialien mit hoher Wärmeleitfähigkeit verwendet, welcher mit den Umgebungsbedingungen kompatibel sind. In Frage kommt beispielsweise Platin, Diamant, Diamont-like Carbon (DLC), keramische Materialien oder Gläser.

Gemäß einer bevorzugten Weiterbildung des erfindungsgemäßen Sensorelements ist vorgesehen, dass das Sensorelement eine Kühl- und/oder Heizeinheit umfasst, welche in einer zur ersten Temperaturebene verschiedenen, parallelen Temperaturebene angebracht ist.

Dies stelle eine Möglichkeit der aktiven Kompensation von Wärmeströmen dar, wofür zusätzliche elektrische Energie benötigt wird. Die Heizleistung, bzw. Kühlleistung wird so lange erhöht bis dass der Wärmeverlust aufgrund der Wärmeströme deutlich reduziert ist (dies wird durch eine geringer werdende Temperaturdifferenz mittels des Sensors detektiert) bzw. kompensiert ist (in diesem Falle wird keine Temperaturdifferenz mittels des Sensors mehr ermittelt).

Eine vorteilhafte Ausgestaltung des erfindungsgemäßen Sensorelements sieht vor, dass die Kühl- und/oder Heizeinheit einen Thermistor und/oder ein Thermoelement umfasst. Die zu diesem Zweck eingesetzten Thermistoren, bzw. Thermoelemente sind in Art und Aufbau nicht zwingen mit den typischerweise in Dünnschichttechnologie, bzw. Dickschichttechnologie aufgebrachten Sensorelementen, bzw. den bereits im Sensorelement befindlichen Temperaturfühler und Sensor, identisch.

Eine vorteilhafte Ausgestaltung des erfindungsgemäßen Sensorelements sieht vor, dass der Temperaturfühler ein Thermistor ist und aus einem Material mit einem definierten Temperaturkoeffizienten besteht, insbesondere Platin oder Nickel. Hierbei kann vorteilhafterweise vorgesehen sein, dass die Kontaktierungen der Komponenten des Thermoelements in der Ebene des Temperaturfühlers aus demselben Material wie der Temperaturfühler bestehen. Dadurch ist der Kontaktierungspunkt des Thermoelements bestmöglich der Temperaturebene des Thermistors angenähert.

Eine vorteilhafte Ausgestaltung des erfindungsgemäßen Sensorelements sieht vor, dass das Thermoelement und/oder das weitere Thermoelement aus einem Verbindungshalbleiter besteht. Jeder Leiter besteht hierbei aus einem verschiedenen Material. Beispielsweise kann ein $(Bi,Sb)2(Te,Se)3$-Verbindungshalbleiterpaar eingesetzt werden. Alternativ zu Verbindungshalbleiter können die folgenden Materialien, bzw. Materialkombinationen verwendet werden: Bi-BiSb, Ni, NiCr, Cu, Pt, PtRh. Daneben können auch weitere Materialkombinationen je nach Technologie und Einsatztemperaturbereich verwendet werden.

Eine vorteilhafte Ausgestaltung des erfindungsgemäßen Sensorelements sieht vor, dass die erste Passivierung und/oder die zweite Passivierung aus einem Glas, aus einem keramischen Material oder einem Kunststoffmaterial besteht. Es werden hierfür typischerweise Materialien mit geringer Wärmeleitfähigkeit verwendet, welche an den Einsatztemperaturbereich angepasst werden können und die in geeigneter Weise strukturierbar sind und eine Integration von Sensoren, bzw. Thermoelemente (bspw. wie obig beschrieben durch Versehen mit Löchern) erlauben. Notwendigerweise muss der thermische Widerstand des Materials bekannt sein, damit später der Wärmestrom quantisiert werden kann.

Hinsichtlich des Verfahrens ist vorgesehen, dass das Verfahren erfindungsgemäß zum Bewerten der Messqualität eines erfindungsgemäßen Sensorelements dient, insofern, dass das Sensorelement die Oberfläche des Objekts thermisch kontaktiert, dass das Sensorelement mit einer Betriebs-/Auswerteeinheit verbunden wird, und dass die Betriebs-/Auswerteeinheit über den Temperaturfühler eine Temperatur des Objekts erfasst und wobei die Betriebs-/Auswerteeinheit eine Ausgangsspannung des Sensors erfasst.

Wie obig beschrieben stellt die erfasste Ausgangsspannung ein Maß für einem im Sensorelement vorliegenden Wärmestrom dar. Anhand der Ausgangsspannung lässt sich der Wärmestrom berechnen. Hierfür muss der Wärmewiderstand der ersten Passivierung zwischen dem Temperaturfühler und dem Sensor zur Erfassung der Temperaturerfassung, bzw. im Falle eines Thermoelements der Wärmewiderstand der ersten Passivierung zwischen Kontakt- und Bezugspunkt des Thermoelements bekannt sein.

Der Wärmestrom lässt sich in erster Näherung berechnen durch:

$$Q = \frac{\Delta T}{R_{th}} = \frac{U}{N * S * R_{th}}$$

Wobei U die erfasste Ausgangsspannung ist und $R_{th}$ den thermischen Widerstand der Passivierung bezeichnet.

Gemäß einer vorteilhaften Ausgestaltung des erfindungsgemäßen Verfahrens ist vorgesehen, dass der Kühl- und/oder Heizeinheit zum Heizen, bzw. Kühlen des Sensorelements in Abhängigkeit der erfassten Ausgangsspannung eine elektrische Leistung zuführt. Die Betriebs-/Auswerteeinheit umfasst einen Regler, welcher die elektrische Leistung steuert.

Eine vorteilhafte Ausgestaltung des erfindungsgemäßen Verfahrens sieht vor, dass die Betriebs-/Auswerteeinheit anhand der erfassten Ausgangsspannung eine tatsächliche Temperatur des Objekts berechnet. Der Regler steuert hierfür die elektrische Leistung derart, dass die erfasste Ausgangsspannung des Sensors gegen Null geht. Das heißt, dass der vom Sensorelement detektierte Wärmestrom ebenfalls gegen Null geht. Da in diesem Fall kein Temperaturgradient vorliegt entspricht die gemessene Temperatur in der ersten Temperaturebene der gesuchten Objekttemperatur. Diese Methode ist als "Zero-Heat-Flux Measurement" bekannt. In der hier beschriebenen Ausführung kann diese besonders vorteilhaft eingesetzt werden, da sowohl der

Temperatursensor und die Kontaktstelle des Thermoelements sowie die Kühl- und/oder Heizeinheit und der Bezugspunkt des Thermoelements technologisch im selben Schritt gefertigt werden.

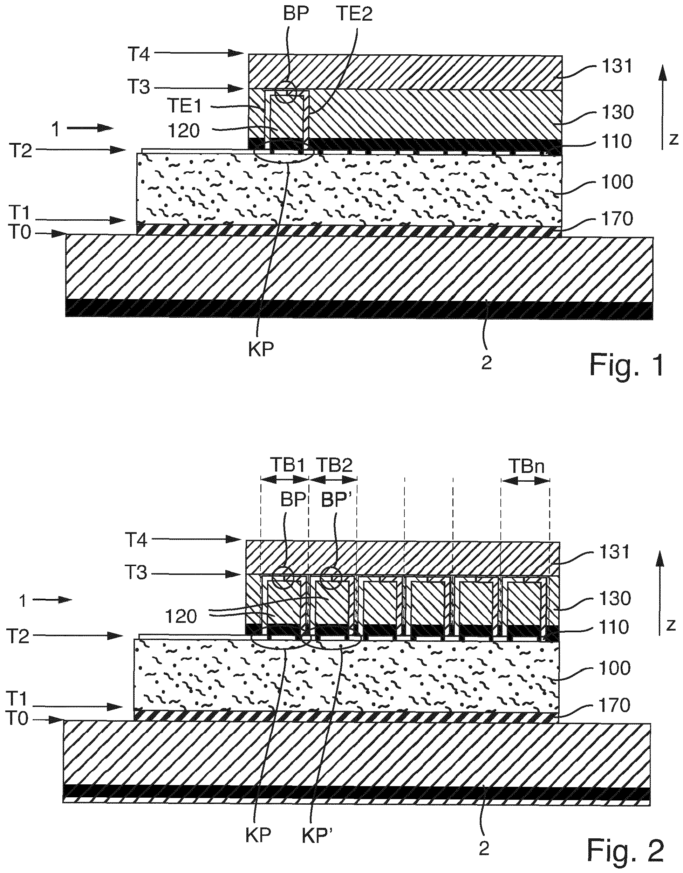

Die Erfindung wird anhand der nachfolgenden Figuren 1-7 näher erläutert.

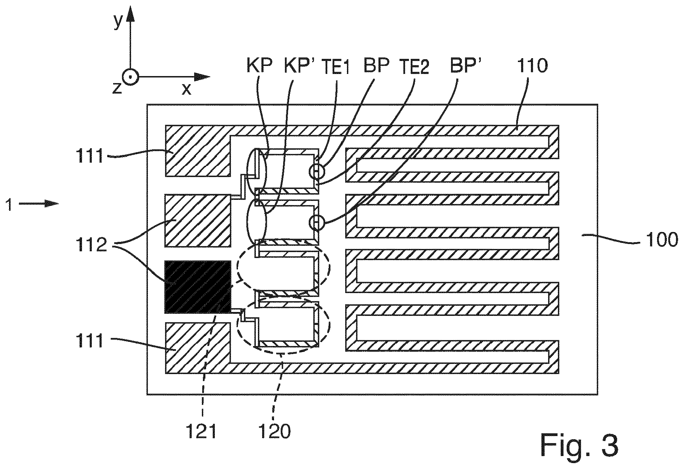

In Fig. 1 ist eine schematische Darstellung eines ersten Ausführungsbeispiels eines Sensorelements 1 im Querschnitt gezeigt. Das Sensorelement 1 besteht aus einem planaren Substrat 100, beispielsweise aus einem keramischen Substrat, beispielsweise $Al_2O_3$. Die Oberfläche des Substrats definiert eine erste Ebene in x- und y-Richtung. Auf das Substrat 100 ist ein Temperaturfühler 110 per Dünnschicht- oder Dickschichttechnik aufgetragen. Bei dem Temperaturfühler 110 handelt es sich insbesondere um einen Thermistor. Der Temperaturfühler ist mäanderförmig ausgestaltet, wie in Fig. 3 erkennbar und ist über Kontaktpads 111 elektrisch kontaktierbar. Auf das Substrat 100 und den Temperaturfühler 100 sind eine erste und eine zweite Passivierung 130, 131 aufgetragen, insbesondere per Dickschichttechnologie. Die Passivierungen 130, 131 bestehen insbesondere aus demselben Material, beispielsweise aus einem Glas, aus einem keramischen Material oder einem Kunststoffmaterial (beispielsweise aus Polyimid, $SiO_2$ oder $Al_2O_3$), sind aber in zwei verschiedenen Fertigungsschritten gefertigt. Die Strukturierung der Passivierungen 130, 131, bspw. in Gestalt von Löchern für später beschriebene Thermoelemente 120 oder Kontaktpads, erfolgt beispielsweise über ein Lithografie- und/oder Ätzverfahren.

Die Rückseite des Substrats 100 des Sensorelements 1 ist mit einem Objekt 2 verbunden, dessen Temperatur bestimmt werden soll. Hierzu ist eine Verbindungsschicht 170 vorgesehen, beispielsweise eine Klebschicht, eine Sinterschicht oder eine Lötschicht, welche eine wärmeleitende Haftung zwischen dem Substrat 110 und dem Objekt 2 etabliert. Bei dem Objekt 2 handelt es sich beispielsweise um einen Träger, insbesondere um ein Plättchen oder ein Röhrchen, welches mit einem Messmedium in Kontakt steht. Es kann sich aber auch um ein tatsächliches Objekt 2 handeln, beispielsweise ein Gehäuse einer Pumpe, an welchem das Substrat befestigt ist.

In einem derartigen Aufbau entstehen, bedingt durch die verschiedenen Materialien, mehrere Temperaturebene T0, T1, T2, T3, T4, welche im Wesentlichen parallel zu der vom Substrat definierten ersten Ebene liegen. Die Temperaturebene T0 ist die Oberflächentemperatur des Objekts 2. Die Temperaturebene T1 ist der Übergang zwischen der Verbindungsschicht 170 und dem Substrat 110. Die Temperaturebene T2, auch als erste Temperaturebene bezeichnet, ist diejenige Temperaturebene, in welcher der Temperaturfühler 110 liegt und deren Temperatur der Temperaturfühler 110 erfasst.

Die Temperaturebene T3 ist liegt im Übergang zwischen den beiden Passivierungen 130, 131. Die Temperaturebene T4 liegt auf der Oberseite der oberen Passivierung 131.

Dieser grundlegende Sensoraufbau bildet die Basis für alle im Folgenden beschriebenen Ausführungsbeispiele.

Die Materialien des Sensorelements 1 sind derart gewählt, dass der absolute Temperaturunterschied zwischen den einzelnen Temperaturebenen T0, T1 sehr gering, bzw. vernachlässigbar ist und somit der Temperaturfühler 110 in einem guten thermischen Kontakt mit dem Objekt 2 steht. Gleichzeitig sind die Materialien der Passivierungen 130, 131 so gewählt, bzw. die Passivierungen so ausgestaltet, dass der Temperaturfühler bestmöglich von der Umgebung isoliert ist. Unter idealen Messbedingungen liegen im Bauteil sowohl in der x-y-Ebene als auch in der z-Richtung keinerlei Wärmeströme vor. In diesem Fall entspricht die vom Temperaturfühler 110 gemessene Temperatur der Temperatur des zu messenden Objekts. Bedingt durch die in der Regel verschiedenen Temperaturen der Bauteiloberfläche (hier Temperaturebene T4) und der Umgebung (beispielsweise Luft) und/oder durch Wärmeeintrag, bzw. Wärmeverlust durch die (hier nicht dargestellten Kontaktierungsdrähte) kommt es zu lokalen Wärmeströmen, welche lokale Temperaturdifferenzen im Bauteil erzeugen. Durch den Temperaturfühler 110 lässt sich dies nicht feststellen, da der Temperaturfühler 110 erstens nur einen absoluten Temperaturwert ohne Vergleich liefert und zweitens der Temperaturfühler 110 einen Integralwert über die von ihm aufgespannte Fläche erfasst. Dies kann dazu führen, dass die vom Temperaturfühler 110 gemessene Temperatur von der realen, absoluten Temperatur des Objekts 2 abweicht.

Zu diesem Zweck wird zumindest ein weiterer Sensor, hier in Form eines Thermoelements 120, in das Sensorelement 1 integriert. Das Thermoelement besteht aus zwei Leitern, welche sich in einem gemeinsamen Bezugspunkt BP treffen und welche einen Kontaktierungspunkt aufweisen, über welchen das Thermoelement 120 elektrisch kontaktiert werden kann. Das Thermoelement 120 ist in die erste Passivierung 120 integriert. Im in Fig. 1 gezeigten Ausführungsbeispiel wird zuerst die erste Passivierung 130 aufgetragen. Danach wird die Passivierung 130 mit Löchern versehen, in welche das Thermoelement 120 eingebaut wird. Anschließend wird die zweite Passivierung 131 aufgebracht. Der Kontaktierungspunkt KP des Thermoelements befindet sich dadurch in der ersten Temperaturebene T2, während sich der Bezugspunkt BP in der Temperaturebene T3 befindet. Die Leiter des Thermoelements weisen zueinander verschiedene Materialien, bspw. zwei verschiedene Verbindungshalbleiter auf. Bedingt durch diese Bauweise erzeugt das Thermoelement 120 eine Ausgangsspannung, welche durch eine Temperaturdifferenz zwischen dem Bezugspunkt BP und dem Kontaktierungspunkt erzeugt wird und welche proportional zur Größe der Temperaturdifferenz ist. Die Ausgangsspannung ist über separate Kontaktpads 112 erfassbar. Im vorliegenden Fall erfasst das Thermoelement eine Temperaturdifferenz zwischen der Temperaturebene T3 und der Temperaturebene T2, in welcher der Temperaturfühler liegt. Somit ist ein Wärmestrom in z-Richtung, also orthogonal zu den Temperaturebenen T0, T1, T2, T3, T4, bzw. zur ersten Ebene erfassbar. Die ausgegebene Ausgangsspannung hängt wie folgt von der Temperaturdifferenz ab:

$$U = S * (T3 - T2)$$

S bezeichnet den thermoelektrischen Koeffizienten der Materialkombination beider Leiter (Einheit $\mu$V/K).

Je höher die Ausgangsspannung ist, desto höher ist auch die Temperaturdifferenz zwischen den Temperaturebenen T2 und T3. Dementsprechend schlechter ist die Aussagequalität der von dem Temperaturfühler 110 erfassten Temperatur, bzw. desto mehr weicht diese wohl von der realen Temperatur des Objekts 2 ab.

In Fig. 2 ist ein weiteres Ausführungsbeispiel gezeigt. Hier werden mehrere Thermoelemente 120, 120' eingesetzt, deren Kontaktierungspunkt KP, KP' jeweils in der Temperaturebene T2 liegt und deren Bezugspunkt BP jeweils in der Temperaturebene T3 liegt. Die Sensorelemente sind auf unterschiedlichen Orten über der Grundebene in x- und/oder y-Richtung angeordnet. Hier gibt es zwei prinzipielle Verschaltungsarten:

1.) Die Vielzahl der Thermoelemente 120, 120' ist seriell miteinander verbunden. Dadurch addieren sich die Ausgangsspannungen aller Thermoelemente zu einer gemeinsamen Ausgangsspannung, welche über die Kontaktpads 112 abgreifbar ist. Eine solche serielle Schaltung erhöht die Sensitivität bei der Erfassung von Wärmeströmen. Der Wärmestrom in z-Richtung ist in diesem Fall jedoch nicht lokal bestimmbar, sondern ist über der von den Thermoelementen aufgespannten Fläche integriert.

2.) Jedes der Thermoelemente ist separat kontaktierbar und liefert eine eigene Ausgangsspannung. Hierzu weist jedes der Thermoelemente separate Kontaktpads auf. Das Substrat ist dadurch in mehrere Teilbereiche TB1, TB2, ..., TBn eingeteilt. Hierdurch sind eine Vielzahl lokaler Wärmeströme erfassbar, da jedes der Thermoelemente einen lokalen Wärmestrom seines jeweiligen Teilbereichs TB1, TB2, ..., TBn detektiert. Es ist auch möglich, pro Teilbereich TB1, TB2, ..., TBn mehrere seriell verschaltete Thermoelemente vorzusehen, um die Sensitivität zu erhöhen.

3.) Eine Kombination von 1.) und 2.):
Jeder der Teilbereiche TB1, TB2, ..., TBn weist mehrere Thermoelemente auf, welche seriell im jeweiligen Teilbereich TB1, TB2, ..., TBn verschaltet sind. Dadurch wird die Sensitivität bei der Erfassung von Wärmeströmen in jedem einzelnen Teilbereich TB1, TB2, ..., TBn erhöht.

Insbesondere ist es vorteilhaft, wenn die Thermoelemente rasterartig, bzw. matrixartig angeordnet sind. Dadurch lassen sich relativ genau Stellen feststellen, an welchen das Sensorelement 1 lokale Defekte, bzw. Fehlstellen aufweist. Beispielsweise kann eine Map angefertigt werden, mittels welcher die Werte der jeweiligen Wärmeströme visualisiert werden.

Das in Fig. 3 gezeigte Sensorelement (Draufsicht) weist Thermoelemente 120, 121 auf, deren Bezugspunkte BP, BP' und Kontaktierungspunkte KP, KP' in derselben Temperaturebene T3 liegen. Dadurch ist ein Wärmestrom in x- und/oder y-Richtung detektierbar. Wie abgebildet, sind die Thermoelemente 120, 120' ist seriell miteinander verbunden. Dadurch addieren sich die Ausgangsspannungen aller Thermoelemente zu einer gemeinsamen Ausgangsspannung, welche über die Kontaktpads 112 abgreifbar ist.

Auch hier ist es jedoch möglich, dass jedes der Thermoelemente über eigene Kontaktpads separat kontaktierbar ist und eine eigene Ausgangsspannung liefert. Auch hier ist die Einteilung in verschiedene Teilbereiche TB1, TB2, ..., TBn möglich, welche ein oder mehrere separate Thermoelemente vorsehen.

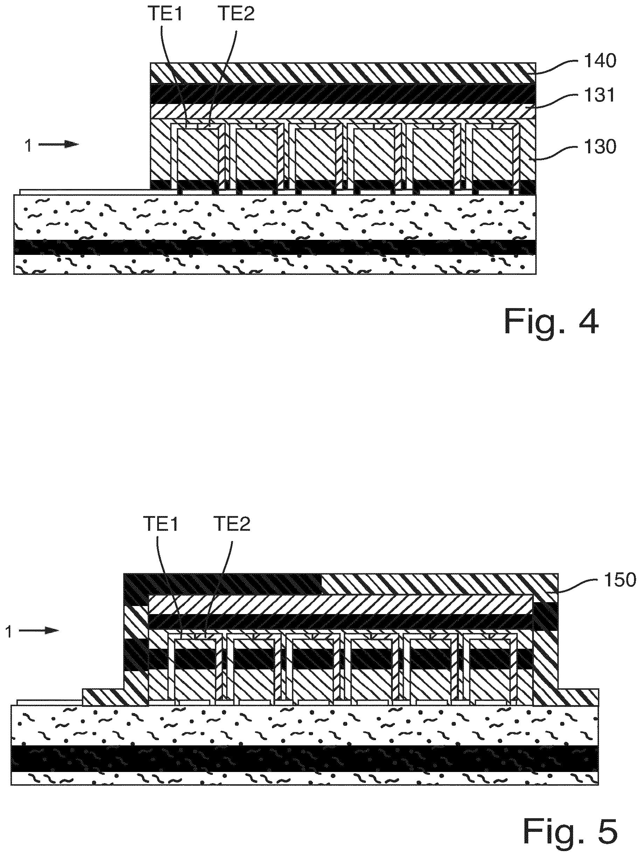

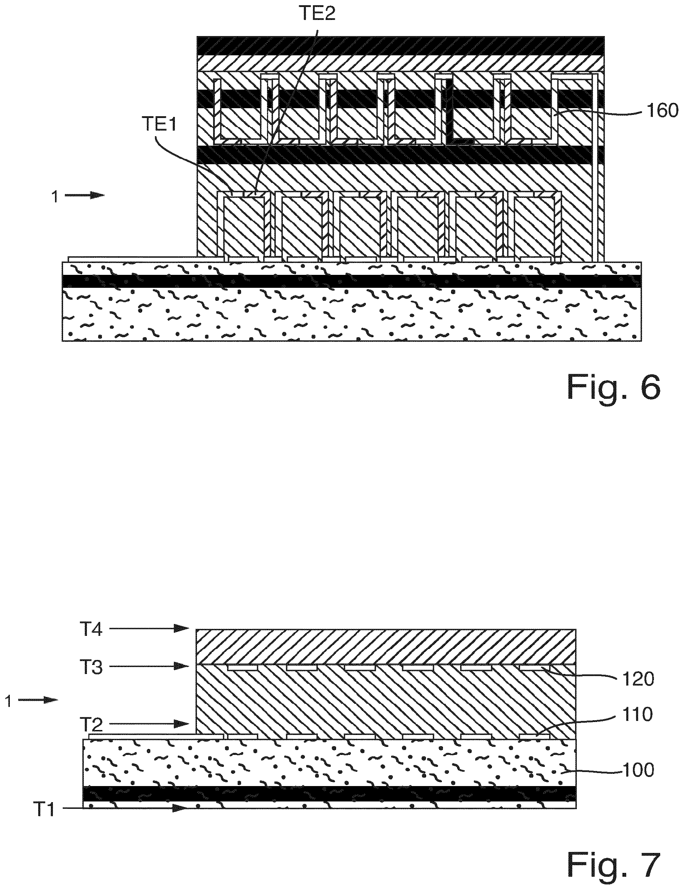

In Fig. 4 ist eine erste Möglichkeit zur Reduktion der Wärmeströme gezeigt. Diese ist auf alle bisher gezeigten Ausführungsformen des Sensorelements 1 anwendbar, ebenso wie auf das in Fig. 7 gezeigte Ausführungsbeispiel. Konkret wird eine Deckschicht 140 auf die zweite Passivierung 131 aufgetragen.

Diese besteht beispielsweise aus einem wärmereflektierenden Material, beispielsweise Golf oder Silber. Diese führt zu einer Reflektion eintreffender Strahlung und verhindert außerdem, dass Wärme aufgrund ungewollter Wärmeströme aus der Passivierung 131 austritt. Dies ermöglicht, dass die vom Temperaturfühler gemessene Temperatur näher an der tatsächlichen Temperatur des Objekts ist.

Alternativ besteht die Deckschicht 140 aus einem wärmeabsorbierenden Material. Vorteilhaft sind poröse inerte Materialien wie Schwarz-Gold, Platin oder Metalloxide. Einkopplungen von Strahlung von außerhalb wird durch die Oberflächengestaltung in der jeweiligen Applikation entgegengewirkt. In Fig. 5 ist eine zweite Möglichkeit zur Reduktion der Wärmeströme gezeigt. Anstatt der Deckschicht 140 ist eine Kapselung 150 vorgesehen, welche derart angeordnet ist, dass die Kapselung 140 die obere Passivierung 131 im Wesentlichen vollständig bedeckt und wärmeleitend kontaktiert und dass die Kapselung das Substrat 100, und insbesondere das Objekt 2, wärmeleitend kontaktiert. Die Kapselung 150 bildet eine Art "thermisches Schild" für Messobjekte mit hoher Wärmekapazität. Das Messobjekt wirkt hierbei als Wärmesenke. Beispielsweise wird als Kapselung ein Metallrohr oder eine massive Platte aus einem metallischen Material verwendet.

Eine Möglichkeit der aktiven Kompensation von Wärmeströmen ist in Fig. 6 gezeigt. Diese ist auf wiederum alle bisher gezeigten Ausführungsformen des Sensorelements 1 anwendbar, ebenso wie auf das in Fig. 7 gezeigte Ausführungsbeispiel und auch mit den in Fig. 4 und 5 gezeigten Reduktionsmechanismen kombinierbar.

Hierbei ist eine Kühl- und/oder Heizeinheit 160 vorgesehen, welche über separate Kontaktpads mit elektrischer Energie beaufschlagbar ist. Durch Zuführen der elektrischen Energie erzeugt die Kühl- und/oder Heizeinheit 160 Wärme oder kühlt deren Umgebung. Als Heizeinheit ist insbesondere in Thermistor oder Heizdraht geeignet. Als Kühleinheit ist insbesondere ein thermoelektrischer Peltierkühler geeignet. Die Kühl- und/oder Heizeinheit 160 ist in einer zu den Thermoelementen verschiedenen Temperaturebene angeordnet.

Insbesondere weist die Kühl- und/oder Heizeinheit 160 einen Regler auf, welcher die Heizleistung, bzw. Kühlleistung so lange erhöht bis der durch die Wärmeströme erzeugte Wärmeverlust deutlich reduziert wird (dies wird durch eine geringer werden Temperaturdifferenz mittels des Sensors detektiert) bzw. kompensiert sind (in diesem Falle wird keine Temperaturdifferenz mittels des Sensors mehr ermittelt).

Es kann auch vorgesehen sein, für jeden der Teilbereiche TB1, TB2, ..., TBn eine unabhängige, separate Kühl- und/oder Heizeinheit 160 vorzusehen, welche die jeweilige Heizleistung, bzw. Kühlleistung entsprechend der in dem jeweiligen Teilbereichs TB1, TB2, ..., TBn detektierten Temperaturdifferenz wählt.

Fig. 7 zeigt ein abschließendes, alternatives Ausführungsbeispiel eines Sensorelements 1. Anstatt eines oder mehrerer Thermoelemente ist als Sensor 120 ein weiterer Temperaturfühler vorgesehen. Dieser muss, im Gegensatz zu einem Thermoelement jedoch mit einer elektrischen Spannung beaufschlagt werden, um ein Messsignal. Mittels des weiteren Temperaturfühlers ist eine absoluten Temperatur der Temperaturebene erfassbar, in welcher der Temperaturfühler angeordnet ist. Wenn diese verschieden zur erfassten Temperatur des Temperaturfühlers in der Temperaturebene T3 ist, dann liegt ein (ungewollter) Wärmestrom vor.

Allen Ausführungsbeispielen gemein ist, dass ein ungewollter Wärmestrom anhand einer Temperaturdifferenz zwischen verschiedenen Temperaturebenen, bzw. verschiedenen Orten auf derselben Temperaturebene, detektierbar ist. Beachtet werden muss jedoch, dass alleine durch die Beabstandung der Temperaturebenen zueinander schon eine Temperaturdifferenz auftreten kann, ohne dass das Sensorelement 1 defekt ist oder die Haftung am Objekt 2 mangelhaft ist. In diesem Falle können Referenzwerte vorab oder in situ erfasst werden. Weicht die erfasste Temperaturdifferenz im Laufe der Betriebszeit eines Sensorelements oder beim Aufbau einer Vielzahl verschiedener Sensorelemente 1 zu diesen Referenzwerten ab, so kann dies ein Indikator für einen ungewollten Wärmestrom sein. Ursache dessen kann beispielsweise eine zeitliche Veränderung der Kontaktierungsschicht 170, bspw. aufgrund von Delamination und/oder eine fehlerhafte Kontaktierung eines Sensorelements 1 sein.

Für alle Ausführungsformen kann alternativ auch ein flexibles Substrat, beispielsweise eine Folie, oder ein gekrümmtes Substrat verwendet werden. Die Grundfläche, und damit die erste Ebene, kann in diesem Fall also gekrümmt ausgestaltet sein. Die weiteren Ebenen, bzw. Temperaturebenen T0, T1, T2, T3, T4 sind dann parallel zu dieser gekrümmten Ebene ausgerichtet.

**Bezugszeichenliste**

| | |
|---|---|
| 1 | Sensorelement |
| 100 | Substrat |
| 110 | Temperaturfühler |
| 111, 112 | Kontaktpads |
| 120, 121 | Sensor zur Bestimmung einer Temperaturdifferenz |
| 130 | erste Passivierung |
| 131 | zweite Passivierung |
| 140 | Deckschicht |
| 150 | Kapselung |
| 160 | Kühl- und/oder Heizeinheit |
| 170 | Verbindungsschicht zur Ankopplung an das zu Messende Objekt. |
| 2 | Objekt |
| BP, BP' | Bezugspunkt |
| KP, KP' | Kontaktierungspunkt |

T0, T1, T2, T3, T4     Temperaturebenen
TB1, TB2, TBn     Teilbereiche des Substrats
TE1, TE2     Leiterpaar

**Patentansprüche**

1.  Sensorelement (1) zur Erfassung einer Temperatur eines Objekts (2), umfassend:

    - Ein Substrat (100), wobei das Substrat (100) eine Grundfläche umfasst, welche eine erste Ebene definiert;
    - Ein in einer ersten Temperaturebene (T2) auf dem Substrat (100) aufgebrachter Temperaturfühler (110), welcher dazu ausgestaltet ist, die Temperatur des Objekts (2) zu erfassen, wobei die erste Temperaturebene in der ersten Ebene oder im Wesentlichen parallel zu der ersten Ebene liegt;
    - Zumindest ein auf einem ersten Teilbereich des Substrats (100) aufgebrachter Sensor (120) zur Bestimmung einer Temperaturdifferenz innerhalb des ersten Teilbereichs; und
    - Eine auf das Substrat (100) aufgebrachte erste Passivierung (130), welche das Substrat (100), den Temperaturfühler (110) und den Sensor zur Bestimmung der Temperaturdifferenz bedeckt, wobei der Sensor (120) zur Bestimmung der Temperaturdifferenz ein erstes Thermoelement umfasst, welches aus einem Leiterpaar (TE1, TE2) aus unterschiedlichem Material besteht, wobei das Leiterpaar (TE1, TE2) einen Kontaktierungspunkt (KP) in der ersten Temperaturebene (T2) und einen vom Kontaktierungspunkt (KP) entfernten Bezugspunkt (BP) aufweist und wobei das Thermoelement derart ausgestaltet ist, dass dieses eine Ausgangsspannung erzeugt, welche Ausgangsspannung ein Maß für eine Temperaturdifferenz zwischen dem Kontaktierungspunkt (KP) und dem Bezugspunkt (BP) darstellt, **gekennzeichnet**

    **dadurch, dass** das Thermoelement derart angebracht ist, dass der Kontaktierungspunkt (KP) und der Bezugspunkt (BP) jeweils in der ersten Temperaturebene (T2) liegen.

2.  Sensorelement (1) nach Anspruch 1, wobei der Sensor zur Bestimmung der Temperaturdifferenz zumindest ein weiteres Thermoelement umfasst, welches elektrisch in Reihe zu dem ersten Thermoelement geschaltet ist und welches derart angeordnet ist, dass dessen Kontaktierungspunkt (KP) in der ersten Temperaturebene (T2) liegt und dass dessen Bezugspunkt (BP) in der ersten Temperaturebene (T2) liegt.

3.  Sensorelement (1) nach zumindest einem der vorherigen Ansprüche, umfassend zumindest einen auf einem zweiten, zum ersten Teilbereich des Substrats (100) verschiedenen zweiten Teilbereich aufgebrachter Sensor zur Bestimmung einer Temperaturdifferenz innerhalb des zweiten Teilbereichs.

4.  Sensorelement (1) nach zumindest einem der vorherigen Ansprüche, umfassend eine Deckschicht (140), welche im Wesentlichen vollständig auf die erste Passivierung (130) oder auf eine auf der ersten Passivierung (130) liegende zweite Passivierung (131) aufgebracht ist.

5.  Sensorelement (1) nach Anspruch 4, wobei die Deckschicht (140) aus einem wärmereflektierenden Material, insbesondere einem metallischen Material, oder aus einem wärmeabsorbierenden Material besteht.

6.  Sensorelement (1) nach zumindest einem der Ansprüche 1 bis 3, wobei das Sensorelement (1) eine aus einem wärmeleitfähigen Material bestehende Kapselung (150) aufweist, welche derart angeordnet ist, dass die Kapselung die Passivierung (130) im Wesentlichen vollständig bedeckt und wärmeleitend kontaktiert und dass die Kapselung das Substrat (100), und insbesondere das Objekt (2), wärmeleitend kontaktiert.

7.  Sensorelement (1) nach Anspruch 1, wobei die Kühl- und/oder Heizeinheit (160) einen Thermistor und/oder thermoelektrisches Material umfasst.

8.  Sensorelement (1) nach zumindest einem der vorherigen Ansprüche, wobei der Temperaturfühler (110) ein Thermistor ist und aus einem Material mit einem definierten Temperaturkoeffizienten besteht, insbesondere Platin oder Nickel, und/oder wobei die Passivierung (130) aus einem Glas, aus einem keramischen Material oder einem Kunststoffmaterial besteht.

9.  Sensorelement (1) nach zumindest einem der Ansprüche 1 bis 2, wobei das Thermoelement und/oder das weitere Thermoelement aus einem Verbindungshalbleiter besteht.

10. Verfahren zum Bewerten der Messqualität eines Sensorelements (1) gemäß zumindest einem der Ansprüche 1 bis 9, wobei das Sensorelement (1) die Oberfläche des Objekts (2) thermisch kontaktiert, wobei das Sensorelement (1) mit einer Betriebs-/Auswerteeinheit verbunden wird, und wobei die Betriebs-/Auswerteeinheit über den Temperaturfühler (110) eine Temperatur des Objekts (2) erfasst und wobei die Betriebs-/Auswerteeinheit eine Ausgangsspannung des Sensors (120) erfasst.

11. Verfahren nach Anspruch 10, wobei die Betriebs-/Auswerteeinheit anhand der erfassten Ausgangsspannung eine tatsächliche Temperatur des Objekts (2) berechnet.

**Claims**

1. A sensor element (1) for recording a temperature of an object (2), comprising:

   - A substrate (100), wherein the substrate (100) comprises a base area that defines a first plane;
   - A temperature sensor (110) that is attached to the substrate (100) on a first temperature plane (T2) and is configured to record the temperature of the object (2), wherein the first temperature plane is arranged on the first plane or essentially parallel to the first plane;
   - At least one sensor (120) that is attached on a first section of the substrate (100) and used to determine a difference in temperature within the first section; and
   - A first passivation (130) that is attached to the substrate (100) and covers the substrate (100), the temperature sensor (110), and the sensor for determining the difference in temperature, wherein the sensor (120) for determining the difference in temperature comprises a first thermal element that itself comprises a conductor pair (TE1, TE2) produced from different material, wherein the conductor pair (TE1, TE2) exhibits a contacting point (KP) on the first temperature plane (T2) and a reference point (BP) that is set at a distance away the contacting point (KP), and wherein the thermal element is configured in such way that it generates an output voltage, wherein said output voltage represents a measurement of a difference in temperature between the contacting point (KP) and the reference point (BP), **characterized in that** the thermal element is attached in such a way that the contacting point (KP) and the reference point (BP) are each arranged on the first temperature plane (T2).

2. A sensor element (1) according to claim 1, wherein the sensor for determining the difference in temperature comprises at least one further thermal element that is connected electrically in series with the first thermal element and is arranged in such a way that its contacting point (KP) is positioned on the first temperature plane (T2) and that its reference point (BP) is positioned on the first temperature plane (T2).

3. A sensor element (1) according to at least one of the preceding claims, comprising at least one sensor that is fitted on a second section of the substrate (100) that differs from the first section and is used for determining a difference in temperature within said second section.

4. A sensor element (1) according to at least one of the preceding claims, comprising a top layer (140) that is essentially attached completely on top of the first passivation (130) or on top of a second passivation (131) that is itself positioned on top of the first passivation (130).

5. A sensor element (1) according to claim 4, wherein the top layer (140) is produced from a heat-reflecting material, in particular a metallic material, or from a heat-absorbing material.

6. A sensor element (1) according to at least one of the claims 1 to 3, wherein the sensor element (1) exhibits an enclosure (150) that is produced from a thermally conductive material and is arranged in such a way that the enclosure essentially completely covers and contacts the passivation (130) in a heat-conducting way and that the enclosure contacts the substrate (100), and in particular the object (2), in a heat-conducting way.

7. A sensor element (1) according to claim 1, wherein the cooling and/or heating unit (160) comprises a thermistor and/or thermoelectric material.

8. A sensor element (1) according to at least one of the preceding claims, wherein the temperature sensor (110) is a thermistor and is produced from a material with a defined temperature coefficient, in particular platinum or nickel, and/or wherein the passivation (130) is produced from a glass material, from a ceramic material, or from a plastic material.

9. A sensor element (1) according to at least one of the claims 1 to 2, wherein the thermal element and/or the further thermal element is produced from a compound semiconductor.

10. A method for assessing the measuring quality of a sensor element (1) according to at least one of the claims 1 to 9, wherein the sensor element (1) thermally contacts the surface of the object (2), wherein the sensor element (1) is connected to an operating/evaluation unit, wherein the operating/evaluation unit records a temperature of the object (2) via the temperature sensor (110), and wherein the operating/evaluation unit records an output voltage of the sensor (120).

11. A method according to claim 10, wherein the operating/evaluation unit calculates an actual temperature of the object (2) on the basis of the recorded output voltage.

**Revendications**

1. Élément capteur (1) destiné à la mesure d'une température d'un objet (2), lequel élément comprend :

   - un substrat (100), le substrat (100) comprenant une surface de base, laquelle définit un premier plan ;
   - une sonde de température (110) appliquée sur le substrat (100) dans un premier plan de température (T2), laquelle sonde est configurée pour mesurer la température de l'objet (2), le premier plan de température étant situé dans le premier plan ou étant pour l'essentiel parallèle au premier plan ;
   - au moins un capteur (120) appliqué sur une première zone partielle du substrat (100), lequel capteur est destiné à déterminer une différence de température à l'intérieur de la première zone partielle ; et
   - une première passivation (130) appliquée sur le substrat (100), laquelle recouvre le substrat (100), la sonde de température (110) et le capteur destiné à déterminer la différence de température, le capteur (120) destiné à déterminer la différence de température comprenant un premier thermocouple, lequel est constitué d'une paire de conducteurs (TE1, TE2) en un matériau différent, la paire de conducteurs (TE1, TE2) présentant un point de contact (KP) dans le premier plan de température (T2) et un point de référence (BP) éloigné du point de contact (KP), et le thermocouple étant conçu de telle sorte qu'il génère une tension de sortie, laquelle tension de sortie est proportionnelle à une différence de température entre le point de contact (KP) et le point de référence (BP), **caractérisé en ce que** le thermocouple est monté de telle sorte que le point de contact (KP) et le point de référence (BP) se trouvent respectivement dans le premier plan de température (T2).

2. Élément capteur (1) selon la revendication 1,
   pour lequel le capteur, pour déterminer la différence de température, comprend au moins un autre thermocouple, lequel est monté électriquement en série avec le premier thermocouple et lequel est disposé de telle sorte que son point de contact (KP) se trouve dans le premier plan de température (T2) et que son point de référence (BP) se trouve dans le premier plan de température (T2).

3. Élément capteur (1) selon au moins l'une des revendications précédentes, lequel élément capteur comprend au moins un capteur appliqué sur une deuxième zone partielle, laquelle est différente de la première zone partielle du substrat (100), lequel capteur est destiné à déterminer une différence de température à l'intérieur de la deuxième zone partielle.

4. Élément capteur (1) selon au moins l'une des revendications précédentes, lequel élément capteur comprend une couche de recouvrement (140), laquelle est appliquée pour l'essentiel complètement sur la première passivation (130) ou sur une deuxième passivation (131) située sur la première passivation (130).

5. Élément capteur (1) selon la revendication 4,
   pour lequel la couche de recouvrement (140) est constituée d'un matériau réfléchissant la chaleur, notamment d'un matériau métallique, ou d'un matériau absorbant la chaleur.

6. Élément capteur (1) selon au moins l'une des revendications 1 à 3,
   l'élément capteur (1) présentant un encapsulage (150) constitué d'un matériau thermoconducteur, lequel encapsulage est disposé de telle sorte à ce qu'il recouvre pour l'essentiel complètement la passivation (130) et la met en contact de manière thermoconductrice, et que l'encapsulage met en contact le substrat (100), et notamment l'objet (2), de manière thermoconductrice.

**7.** Élément capteur (1) selon la revendication 1, pour lequel l'unité de refroidissement et/ou de chauffage (160) comprend une thermistance et/ou un matériau thermoélectrique.

**8.** Élément capteur (1) selon au moins l'une des revendications précédentes,

pour lequel la sonde de température (110) est une thermistance et est constituée d'un matériau présentant un coefficient de température défini, notamment du platine ou du nickel, et/ou
pour lequel la passivation (130) est constituée d'un verre, d'un matériau céramique ou d'un matériau plastique.

**9.** Élément capteur (1) selon au moins l'une des revendications 1 à 2, pour lequel le thermocouple et/ou l'autre thermocouple est/sont constitué(s) d'un semiconducteur composé.

**10.** Procédé destiné à l'évaluation de la qualité de mesure d'un élément capteur (1) selon au moins l'une des revendications 1 à 9,
pour lequel l'élément capteur (1) est en contact thermique avec la surface de l'objet (2), l'élément capteur (1) étant relié à une unité de fonctionnement / d'exploitation, et l'unité de fonctionnement / d'exploitation mesurant une température de l'objet (2) par l'intermédiaire de la sonde de température (110) et l'unité de fonctionnement / d'exploitation mesurant une tension de sortie du capteur (120).

**11.** Procédé selon la revendication 10,
pour lequel l'unité de fonctionnement / d'exploitation calcule une température réelle de l'objet (2) à l'aide de la tension de sortie mesurée.

Fig. 1

Fig. 2

Fig. 3

TE1  TE2

140
131
130

1 →

Fig. 4

TE1  TE2

150

1 →

Fig. 5

TE2

TE1

1 →

160

Fig. 6

T4 →

T3 →

1 →

T2 →

120

110

100

T1 →

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015114314 A1
- DE 102016116101 A1
- JP 2019174128 A
- DE 102013206406 A1
- DE 102006012338 B3